# EUROPEAN PATENT APPLICATION

(11) **EP 2 107 788 A1**
(43) Date of publication of application: **07.10.2009**
(21) Application number: 08305076.5
(22) Date of filing: 01.04.2008
(51) Int. Cl.: H04N 1/393

(54) **Method and apparatus for printing a digital image**

(71) Applicant: Océ Print Logic Technologies S.A., 94015 Créteil Cedex (FR)
(72) Inventor: The designation of the inventor has not yet been filed
(74) Representative: Joly, Jean-Jacques

(57) **Abstract**

In a printing method a digital image received by a printing apparatus is analyzed prior to printing in order to determine whether content of the digital image is to be printed in a non-printable area (42) of a recording medium (4). The non-printable area may be due to technical limitations of the printing apparatus, possibly in combination with the recording medium, and/or may be due to software limitations possibly determined and provided by an operator. If content of the digital image is to be printed in a non-printable area, the digital image is processed such that the content is going to be printed in a printable area (43). Thus, no content of the digital image is lost upon printing.

## Description

The present invention relates to a method for recording a digital image on a recording medium using a printing apparatus and a printing apparatus for performing the method.

A known printer is configured to record an image on a recording medium such as paper, for example. The printer may be any kind of printer such as an inkjet printer or an electrophotographic type of printer, e.g. a laser printer. Usually the printer is suitable for printing on the recording medium, but if ink or toner is deposited outside the recording medium, the printer may become polluted and/or malfunctioning of the printer may result. Therefore, the printer is usually configured to print only in a smaller area compared to the surface area of the recording medium. Also other technical reasons may exist preventing the printer to record an image up to the edge of the recording medium. Thus, a non-printable margin may be determined by characteristics of the printer and/or of the recording medium. Consequently, the recording medium and/or the printer determine a printable area, in which the printer is enabled and configured to record an image on the recording medium.

A digital image may comprise a background and a foreground. The background usually does not contain content information. For example, in a text document, the background may be a white area corresponding to a white colour of commonly used paper. In such an example, the foreground information comprises text characters, which are commonly black. However, the foreground may comprise white characters or images or the like, and the background may be black. As used hereinafter, the foreground, also referred to as the content of the digital image, comprises all parts of the digital image that need a recording material - such as ink or toner - to be recorded on the recording medium - such as paper.

If a part of the content of the digital image lies outside the printable area (although possibly within an area defined by the recording medium), this part of the content will not be recorded on the recording medium and thus, information from the digital image is lost in the recorded (i.e. printed) image.

It is an object of the present invention to provide a method and corresponding recording apparatus, wherein the content of the digital image is not lost when the digital image is recorded on a recording medium.

The object is achieved in a method according to claim 1 and a printing apparatus according to claim 6.

According to the present invention, the digital image is analyzed prior to being printed. The analysis of the digital image is used to determine which part of the digital image needs recording material to be recorded on the intended medium, i.e. which part of the digital image is to be considered as content. The part of the digital image comprising the content is hereinafter referred to as the content area.

The content area may be determined exactly, that is, each picture element, commonly known as a pixel, may be determined and the content area may be defined as a collection of each pixel requiring recording material to be deposited on the recording medium. In an embodiment, the content area is determined as a surface area in which content is present. Such a surface area may have a predetermined shape like a rectangle, for example. In general, any suitable shape may be selected and used. When determining a suitable shape it may be taken into consideration that a non-printable area is usually primarily located near an edge of the recording medium. Therefore, in such an embodiment, any non-content area that is enclosed by content may be considered to be comprised in the enclosing content area.

Having determined a content area of the digital image, characteristics of the content area, such as size and position, are compared to corresponding characteristics of the printable area, thereby obtaining an indication whether the content area will be recorded correctly, if the digital image would be printed without (further) processing. Here, it is noted that only the content area is compared to the printable area, which means that the non-content area is ignored. Consequently, the non-content area may be positioned in a non-printable area. However, since the non-content area does not require recording material to be deposited i.e. recorded on the recording medium, this is not a problem. Moreover, this may be advantageous. For example, it may be contemplated to process the digital image as a whole such that the digital image as a whole fits within the printable area. This however may lead to an unnecessary processing, which requires additional processing capacity and processing time, and may lead to an unnecessary small image on the recording material, thereby e.g. deteriorating the legibility of the image.

In an embodiment only a single content area is to be determined in the digital image, wherein the single content area is to comprise all content elements of the digital image. In such an embodiment it may be advantageous to predetermine a shape of the single content area corresponding to a shape of the printable area, e.g. a rectangle. Thus the step of analyzing the digital image may comprise selecting a size of the predetermined shape such that all content of the digital image is positioned within the predetermined shape. Then, only the size of the predetermined shape and the size of the shape of the printable area need to be compared in order to determine whether the content area fits within the printable area.

If it is determined that the content area does not fit within the printable area, the digital image is processed such that the content area does fit within the content area. This processing may include shifting, (re)sizing and/or rotating. Also, any other kind of suitable processing may be employed.

If the content area fits within the printable area - after being processed or not - the digital image may be printed.

It is noted that - assuming the digital image is represented in a file format - the file format may be any kind of fili format, for example selected from a group comprising a page description language (PDL) format, a vector format, a bitmap format, a text format, or any combination thereof. Of course, if the digital image is automatically analyzed, an analysis method needs to be suitable for analyzing the digital image. Therefore, an apparatus for analyzing may be configured to select a suitable analysis method based on characteristics of the specific file format. If the digital image is analyzed by a (human) operator, the analysis may be based on a preview image presented to the operator. Thus, in such an embodiment, the step of analyzing may comprise, depending on the file format, rendering the digital image such that it is suitable for generating a preview on a user interface and receiving content area information from the user interface.

In an embodiment the step of analyzing the digital image comprises determining a colour of the recording medium. Then, it may be determined that the content area comprises all image elements, such as pixels or the like, having a colour different from the colour of the recording medium. Any image element having the colour of the recording medium does not require a recording material such as ink or toner to be deposited on the recording medium and hence can - in view of the present invention - be regarded as a non-content image element. Similarly, any image element having a colour different from the colour of the recording medium may be regarded as a content image element.

Further features, advantages and embodiments appear in the appended dependent claims and are elucidated in the below description relating to the appended schematical drawings showing non-limiting embodiments and wherein
Fig. 1A shows an embodiment of a printer for use in the present invention;
Fig. 1B shows a recording medium for use in the printer of Fig. 1A;
Fig. 2A and 2Bshow a representation of a first digital image and a second digital image, respectively;
Fig. 3Aillustrates a result of recording the second digital image (Fig. 2B) on a recording medium in accordance with the prior art; and

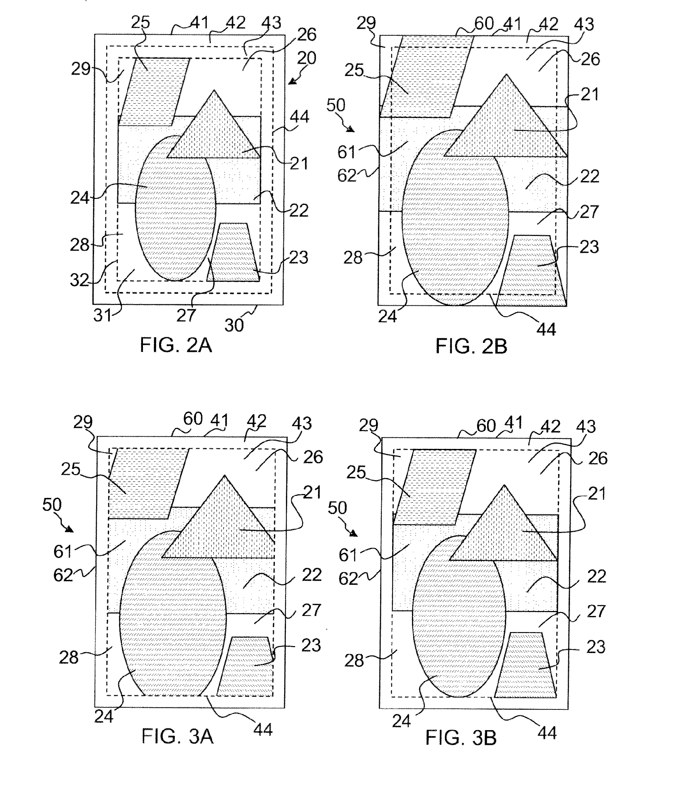

Fig. 3Billustrates a result of recording the second digital image (Fig. 2B) on a recording medium in accordance with the present invention.

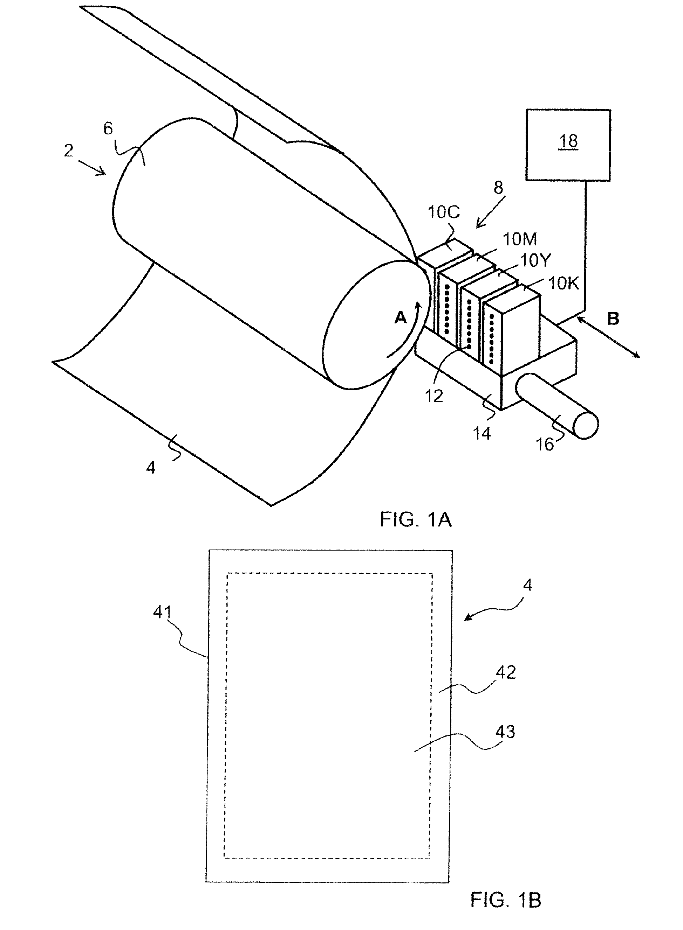

In the drawings, same reference numerals refer to same elements. Fig. 1A schematically illustrates an inkjet printer 2. It is noted that the present invention is not limited to use in an inkjet printer, but may as well be employed in any other kind of printer. The inkjet printer 2 is configured to record a digital image on a recording medium 4, such as a sheet of paper or the like. However, the present invention is not limited to the kind of recording medium, but may be employed when printing on any kind of recording medium. In the illustrated embodiment, the inkjet printer 2 comprises a platen 6 for transporting the recording medium 4 in a first direction A.

The inkjet printer 2 further comprises a recording system 8, which in the illustrated embodiment comprises four printheads 10C, 10Y, 10M, 10K, one for each of four colours (cyan (C), magenta (M), yellow (Y) and black (K)), as is an exemplary configuration that is well known in the art of color inkjet printers. The four printheads 10C, 10M, 10Y, 10K each comprise at least one nuzzle 12 for ejecting drops of ink in order to deposit such an ink drop on the recording medium for forming an ink dot. Further, the four printheads 10C, 10M, 10Y, 10K are mounted on a carriage 14, which is operatively coupled to a guide rail 16 such that the carriage 14 is arranged to reciprocate in a direction B. While the carriage 14 is reciprocating, the printheads 10C, 10M, 10Y, 10K may eject ink drops resulting in ink dots on the recording medium 4 such that the ink dots together may form an image corresponding the digital image input in the inkjet printer 2. The operation of the platen 6 and the recording system 8 is controlled by a suitable control system 18.

Since the arrangement and operation of such an inkjet printer 2 is well known in the art, a more detailed description is omitted here.

Fig. 1B shows a sheet of a recording medium 4. The sheet of the recording medium 4 has an medium edge 41 defining a medium surface area. When used in a printer, e.g. the inkjet printer 2 of Fig. 1A, the printer is usually not configured to be enabled to deposit recording material at every part of the medium surface area, but only in a printable area 43. The printable area has a printable area edge 44. A non-printable area 42 remains between the medium edge 41 and the printable area edge 44.

In this examplery embodiment, a shape and size of the non-printable area 43 is determined by characteristics of the sheet of the recording medium 4, such as size and shape thereof, by charateristics of the printer such as configuration, control and the like and by a characteristics of a combination of the printer and the medium 4, e.g. a position of the sheet of the recording medium 4 on the platen 6 of the inkjet printer 2 according to Fig. 1A.

In another embodiment a shape, size and/or position of the non-printable area 42 may as well be determined by other characteristics and features. For example, the sheet of recording medium 4 may be partly preprinted and the preprinted area's may be designated, e.g. by using suitable software instructions, as non-printable area's. Also for any other reason, a certain area of the recording medium 4 may be designated as a non-printable area e.g. using software settings. Moreover, in a particular embodiment, the non-printable area may be exclusively predetermined, i.e. designated, by a user taking characteristics of the recording medium and/or characteristics of the printer into account.

Fig. 2A illustrates a first digital image 20 projected onto a sheet of recording medium illustrated by the medium edge 41, having a non-printable area 42, a printable area 43 and a printable area edge 44. A first image edge 30 of the first digital image coincides with the medium edge 41. The first digital image 20 comprises a triangular image object 21, a rectangular image object 22, a trapezoid image object 23, an elliptical image object 24 and a quadrilateral image object 25. Hereinafter, to the trangular image object 21, the rectangular image object 22, the trapezoid image object 23, the elliptical image object 24 and the quadrilateral image object 25 may collectively be referred to as the image objects 21 - 25. A first background area 26, a second background area 27, a third background area 28 and a fourth background area 29 remain. Hereinafter, to the first background area 26, the second background area 27, the third background area 28 and the fourth background area 29 may collectively be referred to as the background area 26 - 29.

Assuming that the background area 26 - 29 has a same color as a recoding medium on which it will be printed, the image objects 21 - 25 represent a content of the first digital image 20. The image objects 21 - 25 are positioned within a first content area 31 having a first content area edge 32. As apparent from the distance between the first content area edge 32 and the first image edge 30 - coninciding with the medium edge 41 - the first digital image 20 comprises a background frame area surrounding the first content area 31. Moreover, if the first digital image 20 would be printed by a conventional printer, the recorded image would contain the complete image objects 21 - 25, since the first content area 31 is positioned within the printable area 43.

Fig. 2B shows a second digital image 50. The second digital image 50 comprises a same set of image objects 21 - 25 and a same background area 26 - 29. A second image edge 60 of the second digital image 50 coincides with the medium edge 41. In the second digital image 50, the image objects 21 - 25 are larger than the image objects 21 - 25 in the first digital image 20 (Fig. 2A). Hence, a second content area 61 of the second digital image 50 is larger and a second content area edge 62 of the second content area 61 coincides with the second image edge 60 and the medium edge 41. Due to inter alia the size of the image objects 21 - 25 in the second content area 61, a part of the image objects 21 - 25 of the second digital image 50 is positioned in the non-printable area 42. Consequently, if printed by a conventional printer, those parts positioned in the non-printable area 42 will not be recorded on the recording medium 4.

The first digital image 20 and the second digital image 50 may be formatted in any kind of suitable digital format. For example, the digital image 20, 50 may be in a page description language (PDL), which enables a simple processing to determine which part of the image is a content area and which part is a non-content area. In another embodiment, the digital image 20, 50 may be a bitmap or a similar rasterized image format. In such an embodiment, suitable image processing methods may be applied in order to determine which image elements (e.g. pixels) are part of a content area and which image elements are part of a non-content area. Also other image formats may be used. It is considered that a person skilled in the art of image processing readily understands how a received digital image needs to be processed in order to determine which part is a content area and which part is a non-content area. Similarly, the person skilled in the art readily understands how the format of a received digital file may be determined after receipt of the digital image.

Fig. 3A illustrates a possible result of printing the second digital image 50 using a conventional printing apparatus. As explained above, the printing apparatus is not configured or enabled to print in the non-printable area 42 and consequently the non-printable area 42 remains free of recording material. As a result content of the second digital image 50 that was to be recorded in the non-printable area 42 is not recorded and the second digital image 50 is only partly recorded.

Fig. 3B shows a possible result of printing the second digital image 50 using a printing apparatus configured for performing an embodiment of the method according to the present invention. According to the present invention, when the second digital image 50 is received by the printing apparatus the second digital image 50 is analyzed in order to determine which part of the second digital image 50 is to be designated as content and which part may be designated as non-content. For example, every pixel having a color corresponding to a color of the recording medium 4 may be designated as a non-content pixel. It is noted that the colors do not necessarily be exactly the same, but a range around the medium color may be defined. Based on the content, a content area may be determined, for example by determining an area having a shape corresponding to a shape of the recording medium 4, wherein said area is selected to be as small as possible while comprising all content pixels. Using this exemplary method, the second content area 61 has been determined and has been designated as such.

The analysis to determine a content area may be performed automatically by the printing apparatus or may be performed by an operator, possibly upon request from the printing apparatus. A suitable user interface may for example show a representation of the second digital image 50 and a rectangularly shaped line representing the second content area edge 62 superimposed.

In order to determine whether content is present in any non-printable area 42, the content area and the printable area may be compared. For example, a position, a size and the like of each of the area's may be compared in order to determine whether the content area is positioned within the printable area. Evidently, the content area 61 exceeds the printable area 43. Therefore, the printing apparatus proceeds with processing the second digital image 50. In the illustrated example, the second digital image 50 is scaled, i.e. resized, such that the size of the second content area 61 does not exceed the size of the printable area 43. Depending on the specific embodiment of the scaling algorithm, it may be necessary to shift the scaled second digital image 50 such that the second content area 61 is positioned within the printable area 43. Then, the second digital image 50 may be printed obtaining the result as illustrated in Fig. 3B.

Now again referring to Fig. 2A, if the first digital image 20 would be received by a printing apparatus configured to perform an embodiment of the method according to the present invention, the analysis of the content may obtain the first content area 31 having the first content area edge 32. Then, comparison with the printable area 43 would provide the result that the first content area 31 is positioned completely within the printable area 43. Therefore, despite the fact that the first image edge 30 of the first digital image 20 is positioned outside the printable area 43, meaning that the first digital image 20 is larger than the printable area 43, the first digital image 20 is not processed and may be printed as it is without loosing content.

Thus, it is dosclosed that in a printing method a digital image received by a printing apparatus is analyzed prior to printing in order to determine whether content of the digital image is to be printed in a non-printable area of a recording medium. The non-printable area may be due to technical limitations of the printing apparatus, possibly in combination with the recording medium, and/or may be due to software limitations possibly determined and provided by an operator. If content of the digital image is to be printed in a non-printable area, the digital image is processed such that the content is going to be printed in a printable area. Thus, no content of the digital image is lost upon printing.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Method for recording a digital image on a recording medium using a printing apparatus, the printing apparatus being configured to record content in a printable area, the printable area being determined by characteristics of the printing apparatus and/or by characteristics of the recording medium, the method comprising:
(a)analyzing the digital image in order to determine a content area and a non-content area;
(b)comparing characteristics of the content area with characteristics of the printable area in order to determine whether the content area of the image is positioned within the printable area;
(c)if at least a part of the content area is positioned outside the printable area, processing the digital image such that the content area is positioned within the printable area.

2. Method according to claim 1, wherein the method further comprises
(d)printing the digital image on the recording medium.

3. Method according to claim 1, wherein step (a) comprises determining a colour of the recording medium, the content area comprising all image elements having a colour different from the colour of the recording medium.

4. Method according to claim 1, wherein a kind of processing as performed in step (c) comprises a processing step selected from the group comprising (re)sizing, shifting and rotating.

5. Method according to claim 1, the digital image being represented in a file format, the file format being selected from a group comprising a page description language, PDL, format, a vector format, a bitmap format, a text format, or any combination thereof.

6. Printing apparatus configured to perform the method according to claim 1.

7. Printing apparatus according to claim 7, the printing apparatus comprising
• an input for receiving a digital image;
• a processing unit operatively coupled to the input, the processing unit being configured to analyze the digital image in order to determine a content area, being configured to determine the printable area and being configured, if at least a part of the content area is positioned outside the printable area, to process the digital image such that the content area is positioned within the printable area.
